# EUROPÄISCHE PATENTSCHRIFT

(11) **EP 0 816 649 B1**
(45) Veröffentlichungstag und Bekanntmachung des Hinweises auf die Patenterteilung: **28.08.2002**
(21) Anmeldenummer: 97111002.8
(22) Anmeldetag: 02.07.1997
(51) Int. Cl.: F01N 7/18, F01N 1/24, F01N 1/06

(54) **Absorptions-/Reflexions-Schalldämpfer**
Absorption and reflection type silencer
Silencieux à absorption et à réflexion

(30) Priorität: 05.07.1996 DE 19627079
(43) Veröffentlichungstag der Anmeldung: 07.01.1998
(73) Patentinhaber: J. Eberspächer GmbH & Co. KG, 73730 Esslingen (DE)
(72) Erfinder: Wörner, Siegfried, 73734 Esslingen (DE)

(56) Entgegenhaltungen:
- EP-A- 0 353 761
- EP-A- 0 389 401
- FR-A- 2 502 693

## Beschreibung

Die Erfindung betrifft einen Absorptions-/Reflexions-Schalldämpfer in Mehrkammerbauweise, mit einem Außengehäuse und zwei Innenhalbschalen, in welchen die Abgasführung eingeprägt bzw. eingepreßt ist und welche die inneren Trennwände der einzelnen Kammern ausbilden, wobei die zwei Innenhalbschalen gebogene Randabschnitte aufweisen, die gegen das Außengehäuse abgestützt sind.

Aus EP 0 268 728 B1 ist ein Absorptions-/Reflexions-Schalldämpfer bekannt, welcher aus vier Halbschalen. - zwei Außenschalen und zwei Innenschalen - besteht, wobei die vier Halbschalen durch Laser-Schweißungen innen und außen fest miteinander verbunden sind. Der komplette Funktions-Innenaufbau mit Quer-Trennwänden und Abgasführung ist in den Innenhalbschalen eingeprägt. Nachteil des bekannten Schalldämpfersystems ist die feste Verbindung von Innen- und Außenhalbschalen, welche im Betrieb einem großen Temperaturgefälle und mithin großen Wärmespannungen ausgesetzt sind, wodurch die Lebensdauer des Schalldämpfers beieinträchtigt ist. Das Außengehäuse ist ausschließlich in geschweißter Halbschalentechnik gefertigt.

Ein aus EP-A-0 389 401 bekannter Absorptions-/Reflexions-Schalldämpfer der eingangs genannten Art weist Innenhalbschalen auf, deren Randabschnitte gebogen sind und sich gegen das Außengehäuse abstützen. Von Nachteil bei der bekannten Anordnung ist, daß die beiden Innenhalbschalen im Bereich ihrer gebogenen, nach oben bzw. nach unten gerichteten Randabschnitte zueinander nicht fixiert und abgedichtet sind.

Aufgabe der Erfindung ist die Schaffung eines Schalldämpfers der eingangs genannten Art, welcher mit einfachen Mitteln variantenreich gefertigt werden kann und insbesondere einen Dehnungsausgleich zwischen Innen- und Außengehäuse zwecks Verhinderung von überhöhten Wännespannungen besitzt.

Gelöst wird die der Erfindung zugrundeliegende Aufgabe durch die im Anspruch 1 angegebenen Merkmale.

Vorteilhaft weitergebildet wird der Erfindungsgegenstand durch die Merkmale der Unteransprüche 2 bis 14.

Wesen der Erfindung ist, die zwei Innenhalbschalen als vorgefertigtes inneres Halbschalensystem mit einem gemeinsam gebogenen Randabschnitt auszubilden, welcher für eine Endmontage des Schalldämpfers in das Außengehäuße eingepreßt wird. Die formschlüssig zueinander gebogenen Randabschnitte der zwei Innenhalbschalen liegen aneinander an und sind gemeinsam in das Außengehäuse eingepreßt. Der gebogene Randabschnitt steht in kraftschlüssiger elastischer Verbindung zum Außengehäuse und ermöglicht im Betrieb des Schalldämpfers einen Dehnungsausgleich zwischen Innen- und Außengehäuse, so daß wärmespannungen weitgehend ausgeglichen werden können. Die formschlüssige Anlage bzw. die gleichförmige Biegung wird vorzugsweise durch einen gemeinsamen Biegevorgang realisiert. Durch die Erfindung können die obere Innenhalbschale und die untere Innenhalbschale als Ganzes in das Außengehäuse im Bereich der gebogenen Randabschnitte unter Vorspannung eingepreßt werden, wobei ein elastischer spielfreier Sitz entsteht.

Besonders vorteilhaft ist es, daß das innere Halbschalensystem wahlweise in eine in Wickeltechnik gefertigte Außenschale, d.h. in einen gewickelten Außenmantel mit zwei flachen Außenböden, oder in zwei in Halbschalentechnik gefertigte Außenhalbschalen eingesetzt werden kann, und mithin eine flexible variantenreiche Produktion der Einzelteile möglich ist.

Im besonderen ist der gemeinsam gebogene Randabschnitt ein hochgestellter Randabschnitt, welcher in den gewickelten Außenmantel eines Außengehäuses eingepreßt und wahlweise durch Heftpunkte fixiert ist.

Das innere Halbschalensystem besitzt in vorteilhafter Weise gepunktete oder getoxte Innenhalbschalen.

Bei einem einfach aufgebauten Schalldämpfer in Mehrkammerbauweise ist zweckmäßigerweise das Schalldämpfervolumen durch das innere Halbschalensystem in eine Oberkammer und in eine Unterkammer aufgeteilt, wobei bevorzugt die Oberkammer ein Absorptionskammer und die Unterkammer eine Reflexionskammer ist.

Das Absorptionspaket der Oberkammer kann wahlweise Basalt-/Cr-Wolle oder eine automatisch eingefüllte E-Glaswolle sein.

Die Außenkanten der Innenhalbschalen sind insbesondere in einem Abstand zu den zugeordneten Außenböden eines gewickelten Außengehäuses angeordnet, wobei der Abstand mindestens ca. 2mm beträgt.

Bei einer bevorzugten Ausführungsvariante ist die Abgasführung in Form von S-förmig eingeprägten, halbrohrförmigen Vertiefungen in den Innenhalbschalen ausgebildet, wobei ein Eingangsrohrabschnitt, ein mittlerer Rohrabschnitt und ein Ausgangsrohrabschnitt vorgesehen und der Rohreintritt und der Rohraustritt am Außengehäuse, insbesondere an den beiden Außenböden eines gewickelten Außengehäuses, durch Verschweißen angebunden bzw. fixiert sind.

Die eingeprägte Halbrohrführung der unteren Innenhalbschale ist vorteilhafterweise nach der ersten 180°-Umlenkung im mittleren Rohrabschnitt für eine Teillänge bis nahe an den Außenmantel nach unten durchgezogen und im tiefsten Bereich mit Schlitzen oder Rundlöchern zur Kondensatableitung perforiert und im Ausgangsrohrabschnitt bevorzugt ohne Perforation und im Eingangsrohrabschnitt mit Perforation bzw. mit Ankopplung an die untere Reflexionskammer ausgebildet.

Die eingeprägte Halbrohrführung der oberen Innenhalbschale: ist zweckmäßigerweise zumindest im Eingangsrohrabschnitt und im mittleren Rohrabschnitt mit Lang- oder Rundlöchern perforiert und an die obere Absorptionskammer angekoppelt.

Die durch die Innenhalbschalen gebildete Trennwand zwischen Ober- und Unterkammer kann zumindest teilweise mit Durchgangsöffnungen versehen sein.

Die Erfindung wird nachfolgend anhand eines Ausführungsbeispiels unter Bezugnahme auf die beigefügte Zeichnung näher erläutert; es zeigen:
- Fig. 1: einen Absorptions-/Reflexions-Schalldämpfer in einem schematischen Vertikalschnitt,
- Fig. 2: den Schalldämpfer nach Fig. 1 in einem scheamtischen Horizontalschnitt längs der Linie C-C, und
- Fig. 3: den Schalldämpfer in einem schematischen Querschnitt längs der Linie A-A der Fig. 1.

Gemäß Zeichnung umfaßt ein Absorptions-/Reflexions-Schalldämpfer 1 eines Kraftfahrzeugs ein Außengehäuse und ein Innengehäuse.

Das Innengehäuse ist im wesentlichen horizontal im Außengehäuse angeordnet und bildet eine Trennwand mit Aufteilung des gesamten Schalldämpfervolumens des Außengehäuses in eine Oberkammer 4 und in eine Unterkammer 5. Im Innengehäuse befindet sich eine Abgasführung. Die Oberkammer 4 ist eine Absorptionskammer mit einem Absorptionspaket in Form von Basalt-/Cr-Wolle oder E-Glaswolle. Die Unterkammer 5 ist eine einen Hohlraum aufweisende Reflexionskammer.

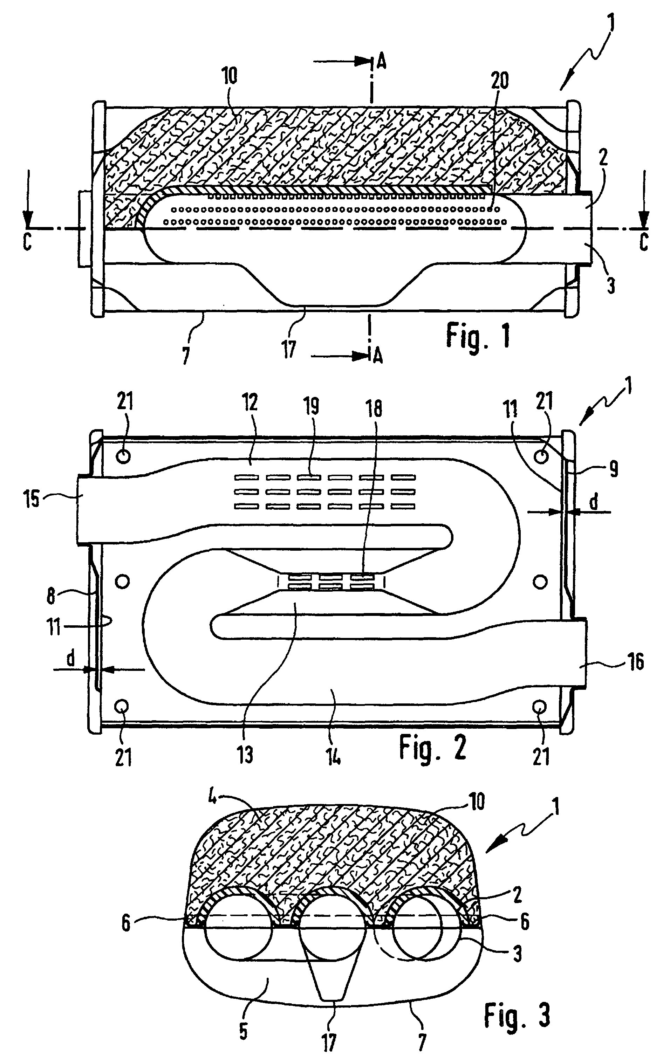

Im besonderen umfaßt das in Wickeltechnik gefertigte Außengehäuse einen gewickelten Außenmantel 7 und zwei im wesentlichen flache Außenböden 8, 9, während das Innengehäuse zwei in Halbschalentechnik gefertigte Innenhalbschalen 2, 3 besitzt, in welchen die Abgasführung jeweils halbrohrförmig im wesentlichen S-förmig eingeprägt bzw. eingepreßt ist, wie dies der Fig. 2 zu entnehmen ist.

Die Abgasführung sind also S-förmig eingeprägte, halbrohrförmige Vertiefungen in den Innenhalbschalen 2, 3, wobei ein Eingangsrohrabschnitt 12, ein mittlerer Rohrabschnitt 13 und ein Ausgangsrohrabschnitt 14 gebildet ist. Rohreintritt 15 und Rohraustritt 16 sind an den beiden Außenböden 8, 9 des gewickelten Außengehäuses durch Umfangsvers chweißung angebunden.

Die eingeprägte Halbrohrführung der unteren Innenhalbschale 3 ist nach der ersten 180°-Umlenkung im mittleren Rohrabschnitt 13 für eine Teillänge bis nahe an den Außenmantel 7 nach unten durchgezogen und im tiefsten Bereich 17 mit Schlitzen 18 oder Rundlöchern zur Kondensatableitung perforiert und im Ausgangsrohrabschnitt 14 ohne Perforation ausgebildet. Im Eingangsrohrabschnitt 12 ist eine Perforation 19 vorgesehen, womit der Eingangsrohrabschnitt 12 an die untere Reflexionskammer 5 angekoppelt ist.

Die eingeprägte Halbrohrführung der oberen Innenhalbschale 2 ist im Eingangsrohrabschnitt 12 und im mittleren Rohrabschnitt 13 mit Lang- oder Rundlöchern 20 perforiert und an die obere Absorptionskammer 4 angekoppelt.

Die durch die Innenhalbschalen 2, 3 gebildete Trennwand zwischen Ober- und Unterkammer besitzt Durchgangsöffnungen 21.

Die zwei wie vorstehend ausgebildeten Innenhalbschalen 2, 3 sind als vorgefertigtes inneres Halbschalensystem aneinander gepunktet oder getoxt und besitzen einen gemeinsam gebogenen, hochgestellten Randabschnitt 6, welcher in den gewickelten Außenmantel 7 des Außengehäuses eingepreßt ist, wie dies insbesondere der Fig. 3 zu entnehmen ist. Hierbei steht der gebogene Randabschnitt in kraftschlüssiger elastischer Verbindung zum Außengehäuse und ermöglicht im Betrieb des Schalldämpfers einen Dehnungsausgleich zwischen Innen- und Außengehäuse, so daß Wärmespannungen weitgehend ausgeglichen werden. Der hochgestellte Randabschnitt 6 ist durch Heftpunkte am Außenmantel 7 fixiert.

Die Außenkanten 11 der Innenhalbschalen 2, 3 sind in einem Abstand d von etwas mehr als 2mm zu den zugeordneten Außenböden 8 bzw. 9 angeordnet, so daß eine axiale Ausdehnung des Innengehäuses bzw. der Trennwand im Außengehäuse möglich ist. Bei Axialausdehung der Trennwand tritt gegebenenfalls eine Wölbung der Außenböden 8, 9 ein, an welchen der Rohreintritt 15 und der Rohraustritt 16 befestigt sind.

## Patentansprüche

1. Absorptions-/Reflexions-Schalldämpfer (1) in Mehrkammerbauweise, mit einem Außengehäuße und zwei Innenhalbschalen (2, 3), in welchen die Abgasführung eingeprägt bzw. eingepreßt ist und welche die inneren Trennwände der einzelnen Kammern (4, 5) ausbilden, wobei die zwei Innenhalbschalen gebogene Randabschnitte aufweisen, die gegen das Außengehäuse abgestützt sind,
**dadurch gekennzeichnet,**
**daß** die formschlüssig zueinander gebogenen Randabschnitte (6) der zwei Innenhalbschalen (2, 3) aneinander anliegen und gemeinsam in das Außengehäuse eingepreßt sind.

2. Schalldämpfer nach Anspruch 1,
**dadurch gekennzeichnet,**
**daß** das Außengehäuse wahlweise eine in Wickeltechnik gefertigte Außenschale, d.h. ein gewickelter Außenmantel (7) mit zwei flachen Außenböden (8, 9), oder zwei in Halbschalentechnik gefertigte Außenhalbschalen ist/sind.

3. Schalldämpfer nach Anspruch 2,
**dadurch gekennzeichnet,**
**daß** das innere Halbschalensystem einen gemeinsam hochgestellten Randabschnitt (6) besitzt, welcher in den gewickelten Außenmantel (7) des Außengehäuses eingepreßt und wahlweise durch Heftpunkte fixiert ist.

4. Schalldämpfer nach einem der Ansprüche 1 bis 3,
**dadurch gekennzeichnet,**
**daß** das innere Halbschalensystem gepunktete oder getoxte Innenhalbschalen (2, 3) besitzt.

5. Schalldämpfer nach einem der Ansprüche 1 bis 4,
**dadurch gekennzeichnet,**
**daß** das Schalldämpfervolumen durch das innere Halbschalensystem in eine Oberkammer (4) und in eine Unterkammer (5) aufgeteilt ist.

6. Schalldämpfer nach Anspruch 5,
**dadurch gekennzeichnet,**
**daß** die Oberkammer (4) ein Absorptionskammer und die Unterkammer (5) eine Reflexionskammer ist.

7. Schalldämpfer nach Anspruch 6,
**dadurch gekennzeichnet,**
**daß** das Absorptionspaket (10) der Oberkammer (4) wahlweise Basalt-/Cr-Wolle oder eine automatisch eingefüllte E-Glaswolle ist.

8. Schalldämpfer nach einem der Ansprüche 3 bis 7,
**dadurch gekennzeichnet,**
**daß** die Außenkanten (11) der Innenhalbschalen (2, 3) in einem Abstand (d) zu den zugeordneten Außenböden (8, 9) eines gewickelten Außengehäuses angeordnet sind.

9. Schalldämpfer nach Anspruch 8,
**dadurch gekennzeichnet,**
**daß** der Abstand (d) mindestens ca. 2mm beträgt.

10. Schalldämpfer nach einem der Ansprüche 1 bis 9,
**dadurch gekennzeichnet,**
**daß** die Abgasführung S-förmig eingeprägte, halbrohrförmige Vertiefungen in den Innenhalbschalen (2, 3) sind, welche einen Eingangsrohrabschnitt (12), einen mittleren Rohrabschnitt (13) und einen Ausgangsrohrabschnitt (14) ausbilden, wobei der Rohreintritt (15) und der Rohraustritt (16) am Außengehäuse, insbesondere an den beiden Außenböden (8 bzw. 9) eines gewickelten Außengehäuses, durch Verschweißen angebunden bzw. fixiert sind.

11. Schalldämpfer nach Anspruch 10,
**dadurch gekennzeichnet,**
**daß** die eingeprägte Halbrohrführung der unteren Innenhalbschale (3) nach der ersten 180°-Umlenkung im mittleren Rohrabschnitt (13) für eine Teillänge bis nahe an den Außenmantel (7) nach unten durchgezogen und im tiefsten Bereich (17) mit Schlitzen (18) oder Rundlöchern zur Kondensatableitung perforiert ist.

12. Schalldämpfer nach Anspruch 10 oder 11,
**dadurch gekennzeichnet,**
**daß** die eingeprägte Halbrohrführung der unteren Innenhalbschale (3) im Ausgangsrohrabschnitt (14) ohne Perforation und im Eingangsrohrabschnitt (12) mit Perforation (19) bzw. mit Ankopplung an die untere Reflexionskammer ausgebildet ist.

13. Schalldämpfer nach einem der Ansprüche 10 bis 12,
**dadurch gekennzeichnet,**
**daß** die eingeprägte Halbrohrführung der oberen Innenhalbschale (2) zumindest im Eingangsrohrabschnitt (12) und im mittleren Rohrabschnitt (13) mit Lang- oder Rundlöchern (20) perforiert und an die obere Absorptionskammer angekoppelt ist.

14. Schalldämpfer nach einem der Ansprüche 5 bis 13,
**dadurch gekennzeichnet,**
**daß** die durch die Innenhalbschalen (2, 3) gebildete Trennwand zwischen Ober- und Unterkammer (4, 5) zumindest teilweise mit Durchgangsöffnungen (21) versehen ist.

## Claims

1. Absorption/reflection silencer (1) of multi-chamber design, with an outer casing and two inner half-shells (2, 3), into which the exhaust duct is stamped or pressed and which form the inner partition walls of the individual chambers (4, 5), the two inner half-shells having bent edge portions which are supported against the outer casing, **characterized in that** the edge portions (6) of the two inner half-shells (2, 3), the said edge portions being bent in a form-locking manner relative to one another, rest against one another and are pressed into the outer casing together.

2. Silencer according to Claim 1, **characterized in that** the outer casing is optionally an outer shell produced by winding, i.e. a wound outer shell (7) with two flat outer ends (8, 9), or two outer half-shells produced by a half-shell method.

3. Silencer according to Claim 2, **characterized in that** the inner half-shell system has an edge portion (6) which is raised jointly and which is pressed into the wound outer shell (7) of the outer casing and optionally fixed by means of tacking points.

4. Silencer according to one of Claims 1 to 3, **characterized in that** the inner half-shell system has spot-joined or TOX-joined inner half-shells (2, 3).

5. Silencer according to one of Claims 1 to 4, **characterized in that** the volume of the silencer is divided by the inner half-shell system into an upper chamber (4) and a lower chamber (5).

6. Silencer according to Claim 5, **characterized in that** the upper chamber (4) is an absorption chamber and the lower chamber (5) is a reflection chamber.

7. Silencer according to Claim 6, **characterized in that** the absorption packet (10) of the upper chamber (4) is optionally basalt/Cr wool or an automatically introduced E-glass wool.

8. Silencer according to one of Claims 3 to 7, **characterized in that** the outer edges (11) of the inner half-shells (2, 3) are arranged at a distance (d) from the associated outer ends (8, 9) of a wound outer casing.

9. Silencer according to Claim 8, **characterized in that** the distance (d) is at least about 2 mm.

10. Silencer according to one of Claims 1 to 9, **characterized in that** the exhaust duct comprises S-shaped semi-tubular depressions stamped into the inner half-shells (2, 3), which form an inlet tube portion (12), a central tube portion (13) and an outlet tube portion (14), the tube inlet (15) and the tube outlet (16) being joined or fixed by welding to the outer casing, in particular to the two outer ends (8 and 9 respectively) of a wound outer casing.

11. Silencer according to Claim 10, **characterized in that**, after the first 180° deflection, the stamped-in semi-tubular duct of the lower inner half-shell (3) is drawn downwards over part of its length in the central tube portion (13), bringing it close to the outer shell (7), and is perforated with slots (18) or round holes for condensate removal in the lowest region (17).

12. Silencer according to Claim 10 or 11, **characterized in that** the stamped-in semi-tubular duct of the lower inner half-shell (3) is formed without perforation in the outlet tube portion (14) and with perforation (19) or coupling to the lower reflection chamber in the inlet tube portion (12).

13. Silencer according to one of Claims 10 to 12, **characterized in that** the stamped-in semi-tubular duct of the upper inner half-shell (2) is perforated with slotted or round holes (20), at least in the inlet tube portion (12) and in the central tube portion (13), and is coupled to the upper absorption chamber.

14. Silencer according to one of Claims 5 to 13, **characterized in that** the partition wall formed by the inner half shells (2, 3) between the upper and the lower chamber (4, 5) is provided at least in part with through openings (21).

## Revendications

1. Silencieux à absorption et à réflexion (1) à plusieurs chambres, avec une enceinte extérieure et deux demi-coquilles intérieures (2, 3), dans lesquelles le conduit de gaz d'échappement est imprimé, respectivement embouti et qui forment les parois de séparation intérieures des chambres individuelles (4, 5), dans lequel les deux demi-coquilles intérieures présentent des parties de bord courbées, qui sont appuyées contre l'enceinte extérieure, **caractérisé en ce que** les parties de bord (6) des deux demi-coquilles intérieures (2, 3), courbées l'une vers l'autre en correspondance géométrique, reposent l'une sur l'autre et sont embouties ensemble dans l'enceinte extérieure.

2. Silencieux suivant la revendication 1, **caractérisé en ce que** l'enceinte extérieure est au choix une coquille extérieure fabriquée par la technique de l'enroulement, c'est-à-dire une enveloppe extérieure enroulée (7) avec deux fonds extérieurs plats (8, 9) ou deux demi-coquilles extérieures fabriquées par la technique des demi-coquilles.

3. Silencieux suivant la revendication 2, **caractérisé en ce que** le système intérieur de demi-coquilles possède une partie de bord (6) relevée en commun, qui est emboutie dans l'enveloppe extérieure enroulée (7) de l'enceinte extérieure et qui est fixée au choix par des points d'agrafage.

4. Silencieux suivant l'une quelconque des revendications 1 à 3, **caractérisé en ce que** le système intérieur de demi-coquilles possède des demi-coquilles intérieures (2, 3) soudées par points ou toxage.

5. Silencieux suivant l'une quelconque des revendications 1 à 4, **caractérisé en ce que** le volume du silencieux est divisé par le système intérieur de demi-coquilles en une chambre supérieure (4) et une chambre inférieure (5).

6. Silencieux suivant la revendication 5, **caractérisé en ce que** la chambre supérieure (4) est une chambre à absorption et la chambre inférieure (5) une chambre à réflexion.

7. Silencieux suivant la revendication 6, **caractérisé en ce que** la garniture d'absorption (10) de la chambre supérieure (4) est au choix une laine de basalte/Cr ou une laine de verre non alcalin chargée automatiquement.

8. Silencieux suivant l'une quelconque des revendications 3 à 7, **caractérisé en ce que** les côtés extérieurs (11) des demi-coquilles intérieures (2, 3) sont disposés à une distance (d) des fonds extérieurs associés (8, 9) d'une enceinte extérieure enroulée.

9. Silencieux suivant la revendication 8, **caractérisé en ce que** la distance (d) vaut au moins environ 2 mm.

10. Silencieux suivant l'une quelconque des revendications 1 à 9, **caractérisé en ce que** le conduit de gaz d'échappement est formé d'enfoncements semi-tubulaires imprimés en forme de S dans les demi-coquilles intérieures (2, 3), qui forment une partie de tube d'entrée (12), une partie de tube moyenne (13) et une partie de tube de sortie (14), dans lequel l'entrée du tube (15) et la sortie du tube (16) sont assemblées, respectivement fixées, par soudage à l'enceinte extérieure, en particulier aux deux fonds extérieurs (8 ou 9) d'une enceinte extérieure enroulée.

11. Silencieux suivant la revendication 10, **caractérisé en ce que** le conduit semi-tubulaire imprimé de la demi-coquille intérieure inférieure (3) est, après la première déviation de 180°, étendu vers le bas dans la partie de tube moyenne (13) sur une partie de la longueur jusqu'à proximité de l'enveloppe extérieure (7) et est perforé dans sa région la plus profonde (17) par des fentes (18) ou des trous ronds en vue de l'évacuation du condensat.

12. Silencieux suivant la revendication 10 ou 11, **caractérisé en ce que** le conduit semi-tubulaire imprimé de la demi-coquille intérieure inférieure (3) est formé sans perforations dans la partie de tube de sortie (14) et avec des perforations (19), respectivement un raccordement à la chambre à réflexion inférieure, dans la partie de tube d'entrée (12).

13. Silencieux suivant l'une quelconque des revendications 10 à 12, **caractérisé en ce que** le conduit semi-tubulaire imprimé de la demi-coquille intérieure supérieure (2) est perforé au moins dans la partie de tube d'entrée (12) et dans la partie de tube moyenne (13) avec des trous longs ou ronds (20) et est couplé à la chambre à absorption supérieure.

14. Silencieux suivant l'une quelconque des revendications 5 à 13, **caractérisé en ce que** la paroi de séparation formée par les demi-coquilles intérieures (2, 3) entre les chambres supérieure et inférieure (4, 5) est pourvue au moins en partie d'ouvertures de passage (21).
